# EUROPEAN PATENT SPECIFICATION

(11) **EP 2 239 983 B1**
(45) Date of publication and mention of the grant of the patent: **28.03.2012**
(21) Application number: 09251060.1
(22) Date of filing: 08.04.2009
(51) Int. Cl.: H04W 48/18

(54) **Provision of wireless communication to mobile stations**
Bereitstellung von drahtloser Kommunikation für Mobilstationen
Fourniture d'une communication sans fil à des stations mobiles

(43) Date of publication of application: 13.10.2010
(73) Proprietor: Industrial Technology Research Institute, Hsinchu 31040 (TW)
(72) Inventor: Wang, Hung-Hsiang, Chutung Hsinchu 31040 (TW); Chen, Shi-Yang, Chutung Hsinchu 31040 (TW)
(74) Representative: Roberts, Mark Peter

(56) References cited:
- EP-A- 1 077 582
- WO-A-95/33346
- US-A1- 2002 002 045
- US-A1- 2005 141 450

## Description

This invention relates to systems and methods for providing wireless communication to mobile stations.

Public transportation systems, such as trains, have been favored due to their competitive advantages. For example, taking a train, compared to driving a car, may help to reduce travel expenses, especially when the cost of gasoline is relatively high. Also for example, trains may help to reduce environmental pollution, if people use trains to commute instead of driving their own cars.

Different communication systems have been developed for public transportation systems, to enable passengers to receive wireless communication services when using the public transportation systems. For example, trains typically move along a railway, which is a predetermined route. A conventional communication system for providing wireless communication to train passengers may include base stations located along the railway, and one or more wireless communication devices located on each train. In this conventional system, when a train moves along the railway, the wireless communication device on the train may communicate with one of the base stations, determined by the location of the train. User terminals carried by passengers on the train, such as cell phones or laptops, may then receive wireless communication services by communicating with the wireless communication device located on the train.

In practice, when the train moves from a coverage area of a first one of the base stations to a coverage area of a next one of the base stations, the wireless communication device on the train may perform a handoff between the first and next base stations. However, performance of wireless communication provided to the train may be degraded during the handoff. In addition, to reduce signal interferences between adjacent base stations, a relatively large number of communication channels _{'} may be used.
US 2005/0141450 discloses a system for selecting time division duplex (TDD) or frequency division duplex (FDD) according to parameters regarding a received radio access bearer (RAB) request from a wireless unit.

The features of the invention are defined in the claims. However, where a claim contains multiple features, it must be understood that any one of those features may be applied independently of the others. Accordingly, no assumption is to be drawn that the claims define strict combinations of features that must be grouped together for technical reasons.

According to a first aspect of the present disclosure, there is provided a method for controlling a plurality of base stations located along a predetermined route to provide wireless communication to a plurality of mobile stations each located in one of a plurality of vehicles, the method comprising: determining, for a first one of the plurality of base stations that is serving a first one of the plurality of mobile stations, whether a number of base stations between the first one and a second one of the plurality of base stations is less than a predetermined number, the second one of the plurality of base stations serving a second one of the plurality of mobile stations; and controlling the first one and the second one of the plurality of base stations to communicate with the first one and the second one of the plurality of mobile stations respectively, in a mode based on a result of the determining.

According to a second aspect of the present disclosure, there is provided base station control apparatus for controlling a plurality of base stations located along a predetermined route to provide wireless communication to a plurality of mobile stations each located in one of a plurality of vehicles, the apparatus being configured to: determine, for a first one of the plurality of base stations that is serving a first one of the plurality of mobile stations, whether a number of base stations between the first one and a second one of the plurality of base stations is less than a predetermined number, the second one of the plurality of base stations serving a second one of the plurality of mobile stations; and control the first one and the second one of the plurality of base stations to communicate with the first one and the second one of the plurality of mobile stations, respectively, in a mode based on a result of the determination.

According to a third aspect of the present disclosure, there is provided a communication system for providing wireless communication to a plurality of vehicles configured to move along a predetermined route, the system comprising: a plurality of base stations located along the route; a plurality of mobile stations each located in one of the plurality of vehicles; and base station control apparatus configured to: determine, for a first one of the plurality of base stations that is serving a first one of the plurality of mobile stations, whether a number of base stations between the first one and a second one of the plurality of base stations is less than a predetermined number, the second one of the plurality of base stations serving a second one of the plurality of mobile stations; and control the first one and the second one of the plurality of base stations to communicate with the first one and the second one of the plurality of mobile stations respectively in a mode based on a result of the determination.

Further optional features are defined in dependent claims.

It is to be understood that both the foregoing general description and the following detailed description are exemplary and explanatory only and are not restrictive of the invention, as claimed.

The accompanying drawings, which are incorporated in and constitute a part of this specification, illustrate embodiments consistent with the invention and, together with the description, serve to explain the principles of the invention.

Figs. 1A and 1B illustrate a block diagram of a communication system for providing wireless communication to a plurality of vehicles configured to move along a predetermined route, according to an exemplary embodiment.

Fig. 2 illustrates a flow chart of a method for base station control apparatus to control base stations, according to an exemplary embodiment.

Fig. 3 illustrates a flow chart of a method for base station control apparatus to control a base station to communicate with a mobile station, based on a space division multiple access (SDMA) mode, according to an exemplary embodiment.

Fig. 4 illustrates a flow chart of a method for base station control apparatus to control a base station to communicate with a mobile station, based on a meeting mode using a time division multiple access (TDMA) method, according to an exemplary embodiment.

Fig. 5 illustrates a flow chart of a method for base station control apparatus to control a base station to communicate with a mobile station, based on a meeting mode using a frequency division multiple access (FDMA) method, according to an exemplary embodiment.

Fig. 6 illustrates an exemplary sequence diagram for base station control apparatus to control base stations based on an SDMA mode, according to an exemplary embodiment.

Fig. 7 illustrates an exemplary sequence diagram for base station control apparatus to control base stations based on a meeting mode, according to an exemplary embodiment.

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments consistent with the present invention do not represent all implementations consistent with the invention. Instead, they are merely examples of systems and methods consistent with aspects related to the invention as recited in the appended claims.

In exemplary embodiments, there is provided a communication system that may be used to provide wireless communication to a plurality of vehicles configured to move along a predetermined route, such as trains. When the communication system is used for the vehicles, degradation of wireless communication due to handoff of a mobile station between base stations may be reduced, and efficiency of frequency use may be improved. Embodiments may be implemented in hardware and/or software.

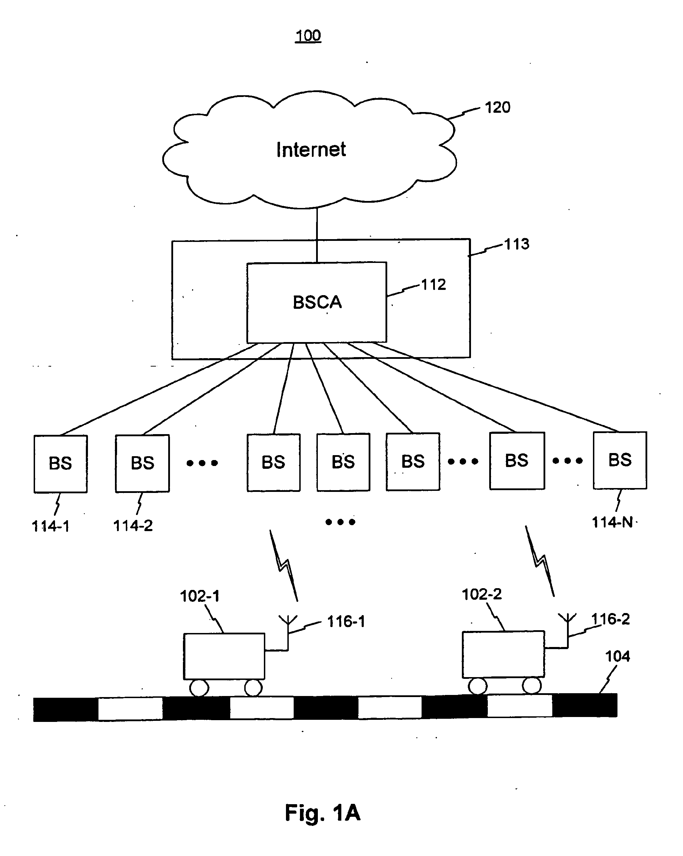

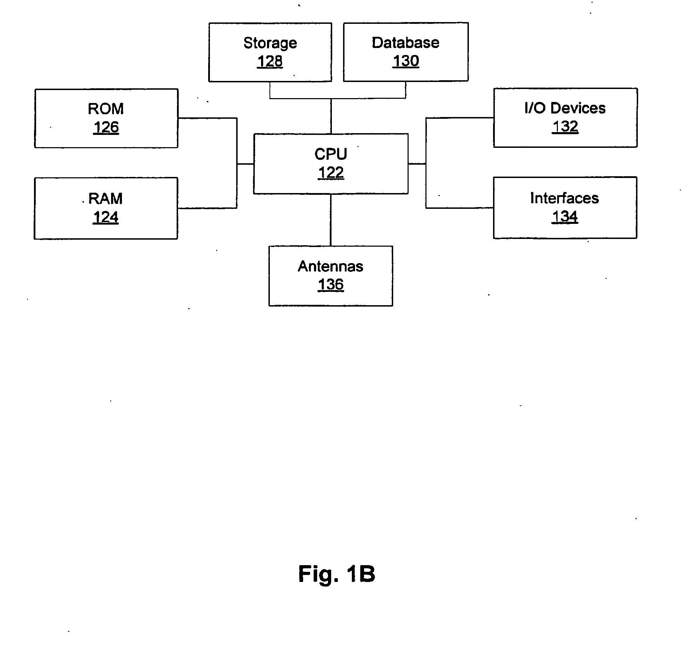

Figs. 1A and 1B illustrate a block diagram of a communication system 100 for providing wireless communication to a plurality of vehicles configured to move along a predetermined route, according to an exemplary embodiment. For illustrative purposes only, it is assumed that the plurality of vehicles include first and second trains 102-1 and 102-2 configured to move along a railway 104.

Referring to Fig. 1A, the communication system 100 may include base station control apparatus (BSCA) 112 located at a base station control center (BSCC) 113, a plurality of base stations (BSs) 114-1, 114-2, ..., 114-N (N is the total number of the base stations) located along the railway 104, and mobile stations 116-1 and 116-2 located on the trains 102-1 and 102-2, respectively.

Referring to Figs. 1A and 1B. each of the base station control apparatus 112, the base stations 114-1, 114-2, ..., 114-N, and the mobile stations 116-1 and 116-2 may include one or more of the following components: at least one central processing unit (CPU) 122 configured to execute computer program instructions to perform various processes and methods, random access memory (RAM) 124 and read only memory (ROM) 126 configured to access and store information and computer program instructions, storage 128 to store data and information, databases 130 to store tables, lists, or other data structures, I/O devices 132, interfaces 134, antennas 136, etc. Each of these components is well-known in the art and will not be discussed further.

In exemplary embodiments, the base station control apparatus 112 may be implemented using one or more computers or workstations. For example, the base station control apparatus 112 may be a computer connected to Internet 120, and that computer may execute computer program instructions to perform methods, as described below. Each of the base stations 114-1, 114-2, ..., 114-N may communicate with the base station control apparatus 112 wirelessly or through a cable.

In exemplary embodiments, the mobile station 116-1 may be a wireless communication device that wirelessly communicates with at least one of the base stations 114-1, 114-2, ..., 114-N, determined by a location of the train 102-1. Similarly, the mobile station 116-2 may be a wireless communication device that wirelessly communicates with at least one of the base stations 114-1, 114-2, ..., 114-N, determined by a location of the train 102-2. The mobile stations 116-1 and 116-2 may provide wireless access points for user terminals, e.g., cell phones or laptops carried by passengers, on the trains 102-1 and 102-2, respectively.

For example, when the train 102-1 is in a coverage area of an i^{th} one of the base stations 114-1, 114-2, ..., 114-N, i.e., the base station 114-i, the mobile station 116-1 may communicate with the base station 114-i. Also for example, when the train 102-2 is in a coverage area of a j^{th} one of the base stations 114-1, 114-2, ..., 114-N, i.e., the base station 114-j, the mobile station 116-2 may communicate with the base station 114-j. For convenience of illustration, it is assumed that the mobile stations 116-1 and 116-2 are currently in the coverage areas of the base stations 114-i and 114-j, respectively.

In exemplary embodiments, the base station control apparatus 112 may control the base stations 114-i and 114-j to communicate with the mobile stations 116-1 and 116-2, respectively, based on a number of base stations between the base stations 114-i and 114-j, which is also the number of base stations between the mobile stations 116-1 and 116-2. For example, the base station control apparatus 112 may determine the number of base stations between the mobile stations 116-1 and 116-2 based on, e.g., schedules of the trains 102-1 and 102-2 and/or control signals in the base station control apparatus 112.

In exemplary embodiments, the base station control apparatus 112 may control the base stations 114-i and 114-j to communicate with the mobile stations 116-1 and 116-2, respectively, based on a space division multiple access (SDMA) mode, if the base station control apparatus 112 determines that the number of base stations between the mobile stations 116-1 and 116-2 is greater than or equal to a predetermined number. For example, if the base station control apparatus 112 determines that there is more than one base station between the mobile stations 116-1 and 116-2, the base station control apparatus 112 may control the base stations 114-i and 114-j to communicate with the mobile stations 116-1 and 116-2, respectively, based on the SDMA mode.

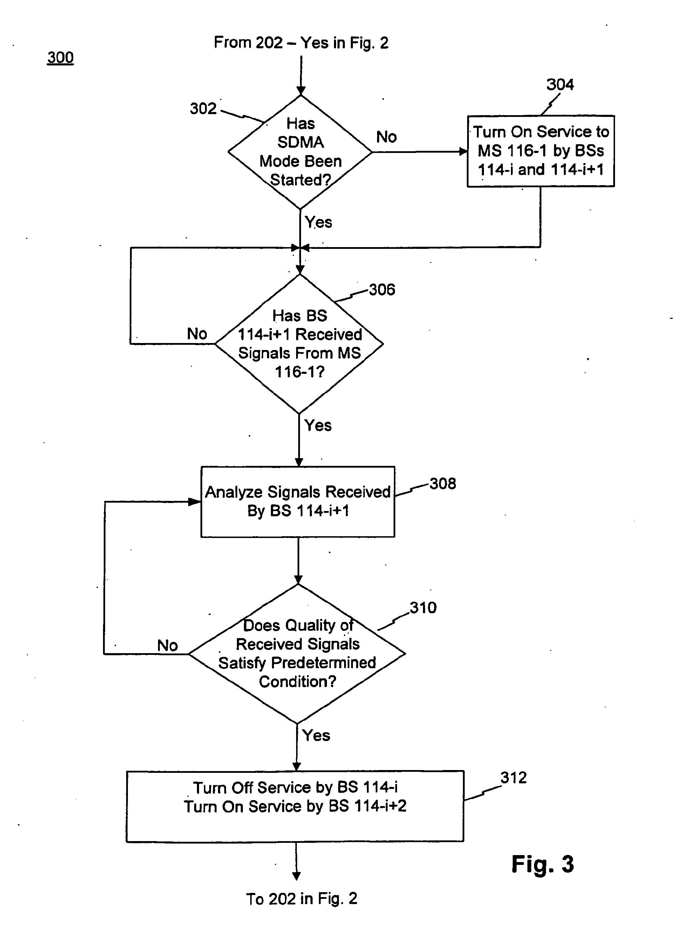

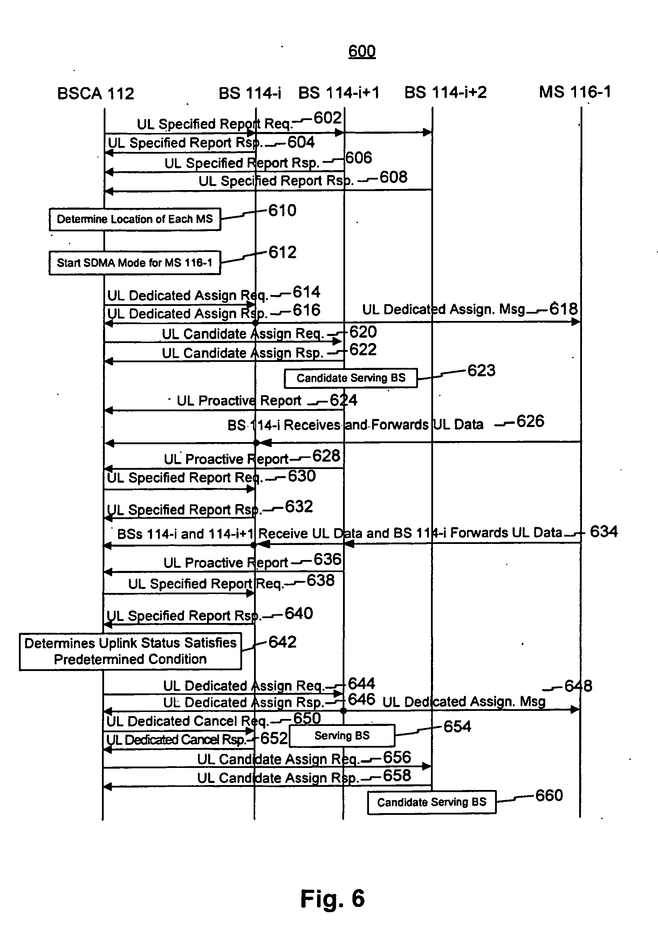

In exemplary embodiments, when in the SDMA mode, the base station control apparatus 112 may control the base station 114-i to transmit data to the mobile station 116-1 at a downlink frequency, and control the base station 114-j to transmit data to the mobile station 116-2 at the same downlink frequency. Similarly, when in the SDMA mode, the base station control apparatus 112 may control the base station 114-i to receive data from the mobile station 116-1 at an uplink frequency, and control the base station 114-j to receive data from the mobile station 116-2 at the same uplink frequency. As a result, efficiency of frequency use may be improved. The SDMA mode is further described below with respect to Figs. 3 and 6.

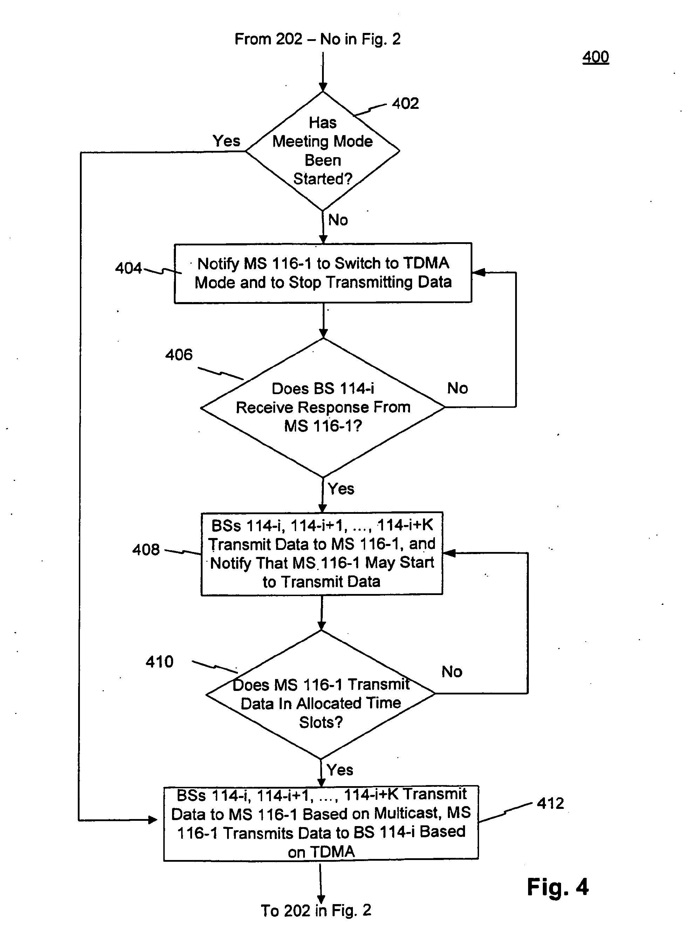

In exemplary embodiments, the base station control apparatus 112 may control the base stations 114-i and 114-j to communicate with the mobile stations 116-1 and 116-2, respectively, based on a meeting mode, if the base station control apparatus 112 determines that the number of base stations between the mobile stations 116-1 and 116-2 is less than the predetermined number. For example, if the base station control apparatus 112 determines that there is only one base station between the mobile stations 116-1 and 116-2, the base station control apparatus 112 may control the base stations 114-i and 114-j to communicate with the mobile stations 116-1 and 116-2, respectively, based on the meeting mode. The meeting mode is further described below with respect to Figs. 4, 5, and 7.

In exemplary embodiments, when in the meeting mode, the base station control apparatus 112 may control the base station 114-i to transmit data to the mobile station 116-1 at a downlink frequency, and control the base station 114-j to transmit data to the mobile station 116-2 at the same downlink frequency. As a result, efficiency of frequency use may be improved. Alternatively, when there are enough bandwidth resources available, the base station control apparatus 112 may control the base station 114-i to transmit data to the mobile station 116-1 at a first downlink frequency, and control the base station 114-j to transmit data to the mobile station 116-2 at a second downlink frequency different from the first downlink frequency.

In addition, when in the meeting mode, the base station control apparatus 112 may control the base stations 114-i and 114-j to receive data from the mobile stations 116-1 and 116-2, respectively, based on a time division multiple access (TDMA) method or a frequency division multiple access (FDMA) method, which will be described in detail below.

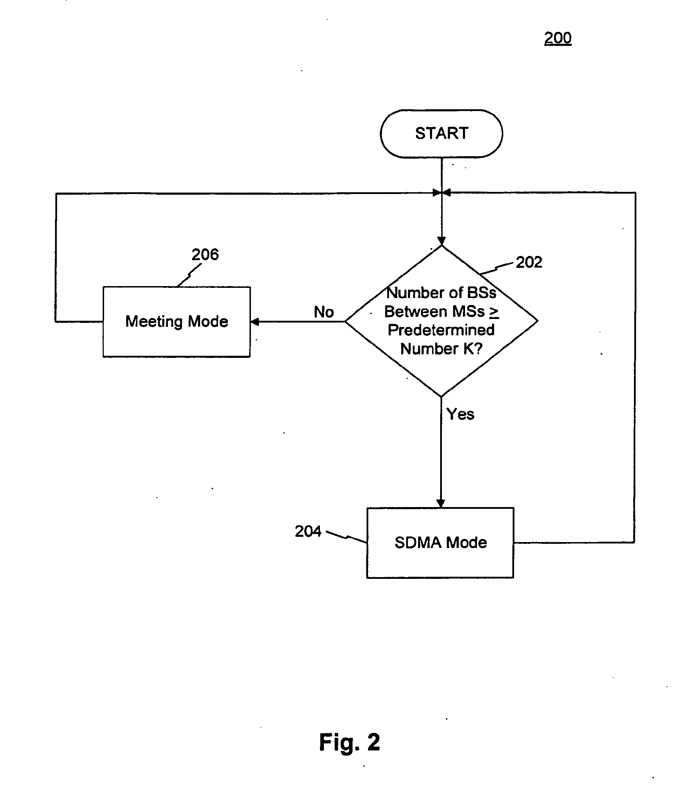

Fig. 2 illustrates a flow chart of a method 200 for the base station control apparatus 112 (Fig. 1A) to control the base stations 114-1, 114-2, ..., 114-N to communicate with the mobile stations 116-1 and 116-2 (Fig. 1A), according to an exemplary embodiment. Referring to Figs. 1A and 2, the base station control apparatus 112 may determine whether the number of base stations between the mobile stations 116-1 and 116-2 is greater than or equal to a predetermined number K (202). If the base station control apparatus 112 determines that the number of base stations between the mobile stations 116-1 and 116-2 is greater than or equal to the predetermined number K (202-Yes), the base station control apparatus 112 may control the base stations 114-i and 114-j to communicate with the mobile stations 116-1 and 116-2, respectively, based on the SDMA mode (204). If the base station control apparatus 112 determines that the number of base stations between the mobile stations 116-1 and 116-2 is less than the predetermined number K (202-No), the base station control apparatus 112 may control the base stations 114-i and 114-j to communicate with the mobile stations 116-1 and 116-2, respectively, based on the meeting mode (206). The determination 202 is repeated as the number of base stations between the mobile stations 116-1 and 116-2 is changed due to movement of the trains 102-1 and/or 102-2.

Fig. 3 illustrates a flow chart of a method 300 for the base station control apparatus 112 (Fig. 1A) to control the base station 114-i to communicate with the mobile station 116-1, based on the SDMA mode, according to an exemplary embodiment. In the illustrated embodiment, it is assumed that the mobile station 116-1 is currently in the coverage area of the base station 114-i, and is moving to a coverage area of one of the other base stations 114-1, 114-2, ..., 114-N that is a neighbor to the base station 114-i, i.e., the base station 114-i+1. In the example, the base stations 114-i and 114-i+1 are neighbors because no other base station associated with the system 100 (Fig. 1A) is physically located between them.

Referring to Figs. 1A and 3, the base station control apparatus 112 may determine whether the SDMA mode has been started (302). The SDMA mode has been started if the base stations 114-i and 114-i+1, operate to serve the mobile station 116-1. If the base station control apparatus 112 determines that the SDMA mode has not been started (302-No), the base station control apparatus 112 may start the SDMA mode by turning on service to the mobile station 116-1 by the base stations 114-i and 114-i+1 (304). In the illustrated embodiment, the mobile station 116-1 is currently in the coverage area of the base station 114-i. Therefore, the base station 114-i+1 may receive no signal from the mobile station 116-1 initially. However, as the mobile station 116-1 moves away from the coverage area of the base station 114-i and moves into the coverage area of the base station 114-i+1, the base station 114-i+1 may receive signals from the mobile station 116-1.

After the SDMA mode has been started (302-Yes), the base station control apparatus 112 may then determine whether the base station 114-i+1 has actually received signals from the mobile station 116-1 (306). If the base station control apparatus 112 determines that the base station 114-i+1 has not received signals from the mobile station 116-1 (306-No), the determination 306 is repeated, until the base station control apparatus 112 determines that the base station 114-i+1 has received signals from the mobile station 116-1. For example, the mobile station 116-1 may have moved into an area covered by both of the base stations 114-i and 114-i+1.

If the base station control apparatus 112 determines that the base station 114-i+1 has received signals from the mobile station 116-1 (306-Yes), the base station control apparatus 112 may further analyze the signals received by the base station 114-i+1, to determine a quality of the received signals based on, e.g., power and/or an error rate of the received signals (308). The base station control apparatus 112 may then determine whether the quality of the received signals satisfies a predetermined condition (310). For example, the base station control apparatus 112 may determine whether the power of the received signals is larger than a predetermined threshold value. Additionally or alternatively, for example, the base station control apparatus 112 may determine whether the error rate of the received signals is lower than a predetermined threshold value.

If the base station control apparatus 112 determines that the quality of the received signals does not satisfy the predetermined condition (310-No), the signals received by the base station 114-i+1 may continue to be analyzed (308), until the base station control apparatus 112 determines that the quality of the received signals satisfies the predetermined condition (310-Yes). For example, as the mobile station 116-1 moves away from the coverage area of the base station 114-i and moves into the coverage area of the base station 114-i+1, the base station 114-i+1 may receive relatively strong signals from the mobile station 116-1. When the base station control apparatus 112 determines that the quality of the received signals satisfies the predetermined condition (310-Yes), the base station control apparatus 112 may turn off service to the mobile station 116-1 by the base station 114-i, and turn on service to the mobile station 116-1 by the one of the base stations 114-1, 114-2, ..., 114-N that is a neighbor to the base station 114-i+1, i.e., the base station 114-i+2 (312). The above-described process may then be repeated as the train 102-1 continues to move along the railway 104.

Similarly, the method 300 may be used by the base station control apparatus 112 (Fig. 1A) to control the base station 114-j to communicate with the mobile station 116-2 based on the SDMA mode.

Fig. 4 illustrates a flow chart of a method 400 for the base station control apparatus 112 (Fig. 1A) to control the base station 114-i to communicate with the mobile station 116-1 based on the meeting mode, according to an exemplary embodiment. For example, when the number of base stations between the mobile stations 116-1 and 116-2 is less than the predetermined number K, the meeting mode may be started.

Referring to Figs. 1A and 4, the base station-control apparatus 112 may determine whether the meeting mode has been started (402). The meeting mode has been started if the base station 114-i receives uplink data from the mobile station 116-1 based on a time division multiple access (TDMA) method. The TDMA method is a channel access method that may be used by a base station to share a frequency channel between multiple mobile stations by receiving data from each of the multiple mobile stations at different time slots respectively allocated to the mobile stations.

If the base station control apparatus 112 determines that the meeting mode has been started (402-Yes), the base station 114-i and the mobile station 116-1 may then communicate with each other. For example, the base station 114-i may transmit data to the mobile station 116-1 based on a multicast scheme, and the mobile station 116-1 may transmit data to the base station 114-i in allocated time slots based on the TDMA method (412). In addition, at the same time, the base stations 114-i+1, 114-i+2, ..., 114-i+K, wherein K is the predetermined number noted above, also operate to serve the mobile station 116-1. In the illustrated embodiment, the mobile station 116-1 is currently in the coverage area of the base station 114-i. Therefore, one or more of the base stations 114-i+1, 114-i+2, ..., 114-i+K, may receive no signal from the mobile station 116-1 initially.

If the base station control apparatus 112 determines that the meeting mode has not been started (402-No), the base station 114-i may send a notification to notify the mobile station 116-1 to switch to a TDMA mode, such that the base station 114-i may receive uplink data from the mobile station 116-1 based on the TDMA method (404). The notification may include information regarding time slot allocation for the mobile station 116-1. The notification may also request the mobile station 116-1 to temporarily stop transmitting data to the base station 114-i when switching to the TDMA mode. The base station 114-i may then determine whether a response, e.g., a confirmation of receipt of the notification, has been received from the mobile station 116-1 (406). If the base station 114-i determines that the confirmation has not been received from the mobile station 116-1 (406-No), the notification 404 is repeated, until the base station 114-i determines that the confirmation has been received from the mobile station 116-1.

After the base station 114-i determines that the confirmation has been received from the mobile station 116-1 (406-Yes), the base station control apparatus 112 may control the base stations 114-i, 114-i+1, ..., 114-i+K to transmit data to the mobile station 116-1, and notify the mobile station 116-1 that the mobile station 116-1 may start to transmit data based on allocated time slots (408). In the illustrated embodiment, the mobile station 116-1 is currently in the coverage area of the base station 114-i. Therefore, the base station 114-i may then determine whether the mobile station 116-1 transmits data in the allocated time slots (410). If the base station 114-i determines that the mobile station 116-1 does not transmit data in the allocated time slots (410-No), the transmission and notification 408 is repeated, until the base station 114-i determines that the mobile station 116-1 transmits data in the allocated time slots (410-Yes).

After the base station 114-i determines that the mobile station 116-1 transmits data in the allocated time slots (410-Yes), the base station 114-i and the mobile station 116-1 may then communicate with each other. For example, the base station 114-i may transmit data to the mobile station 116-1 based on the multicast scheme, and the mobile station 116-1 may transmit data to the base station 114-i in allocated time slots based on the TDMA method (412). In addition, at the same time, the base stations 114-i+1, 114-i+2, ..., 114-i+K also operate to serve the mobile station 116-1. In the illustrated embodiment, the mobile station 116-1 is currently in the coverage area of the base station 114-i. Therefore, one or more of the base stations 114-i+1, 114-i+2, ..., 114-i+K, may receive no signal from the mobile station 116-1 initially.

Similarly, the method 400 may be used by the base station control apparatus 112 (Fig. 1A) to control the base stations 114-j to communicate with the mobile station 116-2 based on the meeting mode.

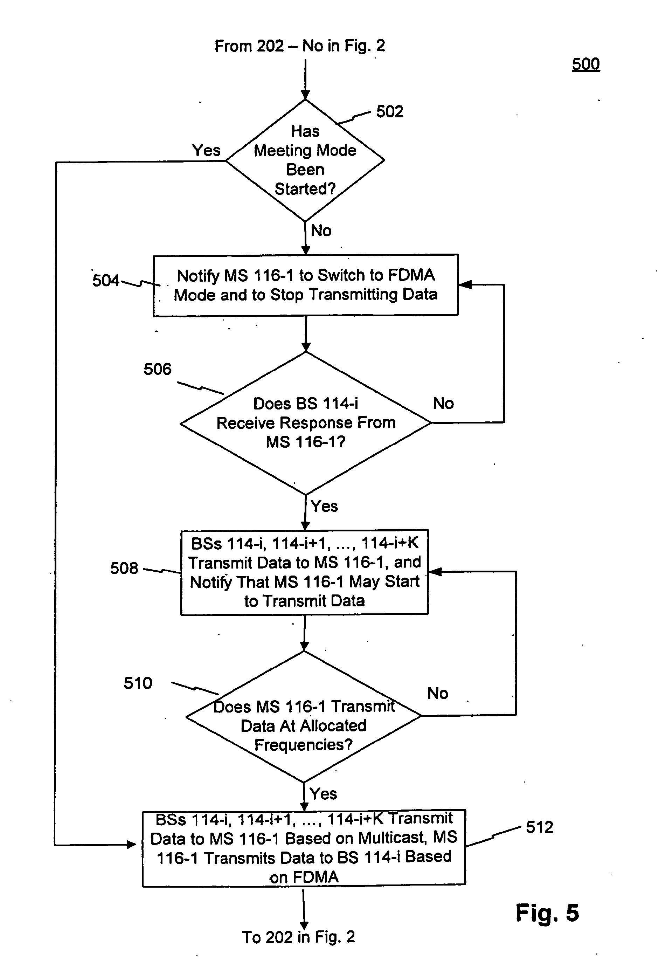

Fig. 5 illustrates a flow chart of a method 500 for the base station control apparatus 112 (Fig. 1A) to control the base station 114-i to communicate with the mobile station 116-1 based on the meeting mode, according to an exemplary embodiment. Referring to Figs. 1A and 5, the base station control apparatus 112 may determine whether the meeting mode has been started (502). The meeting mode has been started if the base station 114-i may receive uplink data from the mobile station 116-1 based on a frequency division multiple access (FDMA) method. The FDMA method is a channel access method that may be used by a base station to share a certain radio spectrum between multiple mobile stations.

If the base station control apparatus 112 determines that the meeting mode has been started (502-Yes), the base station 114-i and the mobile station 116-1 may then communicate with each other based on the FDMA method. For example, the base station 114-i may transmit data to the mobile station 116-1 based on a multicast scheme, and the mobile station 116-1 may transmit data to the base station 114-i at allocated frequencies based on the FDMA method (512). In addition, at the same time, the base stations 114-i+1, 114-i+2, ..., 114-i+K, wherein K is the predetermined number noted above, also operate to serve the mobile station 116-1. In the illustrated embodiment, the mobile station 116-1 is currently in the coverage area of the base station 114-i. Therefore, one or more of the base stations 114-i+1, 114-i+2, ..., 114-i+K, may receive no signal from the mobile station 116-1 initially.

If the base station control apparatus 112 determines that the meeting mode has not been started (502-No), the base station 114-i may send a notification to notify the mobile station 116-1 to switch to an FDMA mode, such that the base station 114-i may receive uplink data from the mobile station 116-1 based on the FDMA method (504). The notification may include information regarding frequency allocation for the mobile station 116-1. The notification may also request the mobile station 116-1 to temporarily stop transmitting data to the base station 114-i. The base station 114-i may then determine whether a response, e.g., a confirmation of receipt of the notification, has been received from the mobile station 116-1 (506). If the base station 114-i determines that the confirmation has not been received from the mobile station 116-1 (506-No), the notification 504 is repeated, until the base station 114-i determines that the confirmation has been received from the mobile station 116-1 (506-Yes).

After the base station 114-i determines that the confirmation has been received from the mobile station 116-1 (506-Yes), the base station control apparatus 112 may control the base stations 114-i, 114-i+1, ..., 114-i+K to transmit data to the mobile stations 116-1, and notify the mobile station 116-1 that the mobile station 116-1 may start to transmit data to the base station 114-i based on allocated frequencies (508). In the illustrated embodiment, the mobile station 116-1 is currently in the coverage area of the base station 114-i. Therefore, the base station 114-i may then determine whether the mobile station 116-1 transmits data at the allocated frequencies (510). If the base station 114-i determines that the mobile station 116-1 does not transmit data at the allocated frequencies (510-No), the transmission and notification 508 is repeated, until the base station 114-i determines that the mobile station 116-1 transmits data at the allocated frequencies (510-Yes).

After the base station 114-i determines that the mobile station 116-1 transmits data at the allocated frequencies (510-Yes), the base station 114-i and the mobile station 116-1 may then communicate with each other. For example, the base station 114-i may transmit data to the mobile station 116-1 based on the multicast scheme, and the mobile station 116-1 may transmit data to the base station 114-i at the allocated frequencies based on the FDMA method (512). In addition, at the same time, the base stations 114-i+1, 114-i+2, ..., 114-i+K also operate to serve the mobile station 116-1. In the illustrated embodiment, the mobile station 116-1 is currently in the coverage area of the base station 114-i. Therefore, one or more of the base stations 114-i+1, 114-i+2, ..., 114-i+K, may receive no signal from the mobile station 116-1 initially.

Similarly, the method 500 may be used by the base station control apparatus 112 (Fig. 1A) to control the base stations 114-j to communicate with the mobile station 116-2 based on the meeting mode.

Fig. 6 illustrates an exemplary sequence diagram 600 for the base station control apparatus 112 (Fig. 1 A) to control the base stations 114-i, 114-i+1, and 114-i+2 noted above based on the SDMA mode, according to an exemplary embodiment. For convenience of illustration, it is assumed that the mobile stations 116-1 and 116-2 (Fig. 1A) are currently in the coverage areas of the base stations 114-i and 114-j, respectively.

Referring to Figs. 1A and 6, the base station control apparatus 112 multicasts an uplink (UL) specified report request 602, to request each of the base stations 114-1, 114-2, ... , 114-N and, hence, the base stations 114-i, 114-i+1, and 114-i+2, to report an identity and an uplink status of any mobile station in its coverage area. The uplink status of a mobile station includes information regarding quality of signals received from that mobile station.

Accordingly, the base stations 114-i, 114-i+1, and 114-i+2 may send uplink specified report responses 604, 606, and 608 to the base station control apparatus 112, respectively. For example, the uplink specified report response 604 sent by the base station 114-i may include an identity and an uplink status of the mobile station 116-1. Also for example, the uplink specified report response 606 sent by the base station 114-i+1 and the uplink specified report response 608 sent by the base station 114-i+2 may indicate no mobile station is currently in their respective coverage areas. In addition, the base station 114-j may send to the base station control apparatus 112 an uplink specified report response (not shown) including information regarding an identity and an uplink status of the mobile station 116-2.

The base station control apparatus 112 may determine a location of each of the mobile stations 116-1 and 116-2 based on, e.g., schedules of the trains 102-1 and 102-2 (610). The base station control apparatus 112 may further refine data regarding the location of each of the mobile stations 116-1 and 116-2 based on the received uplink specified report responses. If the base station control apparatus 112 determines that the mobile station 116-2 is distant from the mobile station 116-1, i.e., the number of base stations between the mobile stations 116-1 and 116-2 is greater than the predetermined number K (Fig. 2-202), the base station control apparatus 112 may start the SDMA mode for the mobile station 116-1 (612).

In one exemplary embodiment, the base station control apparatus 112 determines that the mobile station 116-1 is in the coverage area of the base station 114-i, based on the uplink specified report response 604 received from the base station 114-i. Accordingly, the base station control apparatus 112 may send an uplink dedicated assignment request 614 to the base station 114-i, requesting the base station 114-i to be the serving base station for the mobile station 116-1. For example, the base station control apparatus 112 may request the base station 114-i to, as the serving base station for the mobile station 116-1, forward data received from the mobile station 116-1 to the base station control apparatus 112. Upon receiving the uplink dedicated assignment request 614, the base station 114-i may send an uplink dedicated assignment response 616 to the base station control apparatus 112, indicating that the uplink dedicated assignment request 614 may be satisfied. The base station 114-i may also send an uplink dedicated assignment message 618 to the mobile station 116-1, notifying the mobile station 116-1 that the base station 114-i may perform uplink data transmission for the mobile station 116-1.

In addition, the base station control apparatus 112 may send an uplink candidate assignment request 620 to the base station 114-i+1, requesting the base station 114-i+1 to perform downlink data transmission to the mobile station 116-1, and to periodically report an uplink status of the mobile station 116-1. Upon receiving the uplink candidate assignment request 620, the base station 114-i+1 sends an uplink candidate assignment response 622 to the base station control apparatus 112, indicating the uplink candidate assignment request 620 may be satisfied. Therefore the base station 114-i+1 becomes a candidate serving base station for the mobile station 116-1 (623). In addition, the base station 114-i+1 starts to periodically send an uplink proactive report 624 to the base station control apparatus 112, the uplink proactive report 624 including information regarding the uplink status of the mobile station 116-1 for the base station 114-i+1.

In the illustrated embodiment, the mobile station 116-1 is currently in the coverage area of the base station 114-i, but not in the coverage area of the base station 114-i+1. Accordingly, the base station 114-i receives data from the mobile station 116-1 and forwards the received data to the base station control apparatus 112 (626).

Next, the base station 114-i+1 sends an uplink proactive report 628 to the base station control apparatus 112, reporting a current uplink status of the mobile station 116-1 for the base station 114-i+1. In addition, the base station control apparatus 112 sends an uplink specified report request 630 to the base station 114-i. Accordingly, the base station 114-i sends an uplink specified report response 632 to the base station control apparatus 112, reporting a current uplink status of the mobile station 116-1 for the base station 114-i, in response to the uplink specified report request 630 received from the base station 114-i.

In the illustrated embodiment, the mobile station 116-1 now moves into the area covered by both of the base stations 114-i and 114-i+1. The base station 114-i is still the serving base station for the mobile station 116-1, and may therefore receive uplink data from the mobile station 116-1 and forward the received uplink data to the base station control apparatus 112. However, the base station 114-i+1 may now also receive uplink data from the mobile station 116-1 (634).

The base station 114-i+1 therefore sends an uplink proactive report 636 to the base station control apparatus 112, reporting a current uplink status of the mobile station 116-1 for the base station 114-i+1. In addition, the base station control apparatus 112 sends an uplink specified report request 638 to the base station 114-i. Accordingly, the base station 114-i sends an uplink specified report response 640 to the base station control apparatus 112, reporting a current uplink status of the mobile station 116-1 for the base station 114-i.

As the mobile station 116-1 moves closer to the base station 114-i+1, the above process may be repeated, until the base station control apparatus 112 determines that quality of signals received by the base station 114-i+1 from the mobile station 116-1 has satisfied a predetermined condition, based on the uplink proactive report received from the base station 114-i+1 (642). For example, the base station control apparatus 112 may determine that power of the signals received by the base station 114-i+1 from the mobile station 116-1 has become larger than a threshold value. Also for example, the base station control apparatus 112 may determine that an error rate of the signals received by the base station 114-i+1 from the mobile station 116-1 has become lower than a threshold value.

Accordingly, the base station control apparatus 112 may then send an uplink dedicated assignment request 644 to the base station 114-i+1, requesting the base station 114-i+1 to be the serving base station for the mobile station 116-1. For example, the base station control apparatus 112 may request the base station 114-i+1 to forward to the base station control apparatus 112 data received from the mobile station 116-1. Upon receiving the uplink dedicated assignment request 644, the base station 114-i+1 may send an uplink dedicated assignment response 646 to the base station control apparatus 112, indicating the uplink dedicated assignment request 644 may be satisfied. The base station 114-i+1 also sends an uplink dedicated assignment message 648 to the mobile station 116-1, notifying the mobile station 116-1 that the base station 114-i+1 may perform uplink data transmission for the mobile station 116-1.

In addition, the base station control apparatus 112 sends an uplink dedicated cancellation request 650 to the base station 114-i, requesting the base station 114-i to stop service to the mobile station 116-1. The base station 114-i sends an uplink dedicated cancellation response 652 to the base station control apparatus 112, indicating the uplink dedicated cancellation request 650 may be satisfied. The base station 114-i+1 now becomes the serving base station for the mobile station 116-1 (654).

In addition, the base station control apparatus 112 sends an uplink candidate assignment request 656 to the base station 114-i+2, requesting the base station 114-i+2 to perform downlink data transmission to the mobile station 116-1, and to periodically report an uplink status of the mobile station 116-1. Upon receiving the uplink candidate assignment request 656, the base station 114-i+2 sends an uplink candidate assignment response 658 to the base station control apparatus 112, indicating the uplink candidate assignment request 656 may be satisfied. Therefore the base station 114-i+2 becomes a candidate serving base station for the mobile station 116-1 (660).

As the train 102-1 moves along the railway 104, the above-described process may be repeated. As a result, degradation of wireless communication due to handoff between different base stations may be reduced for the mobile station 116-1.

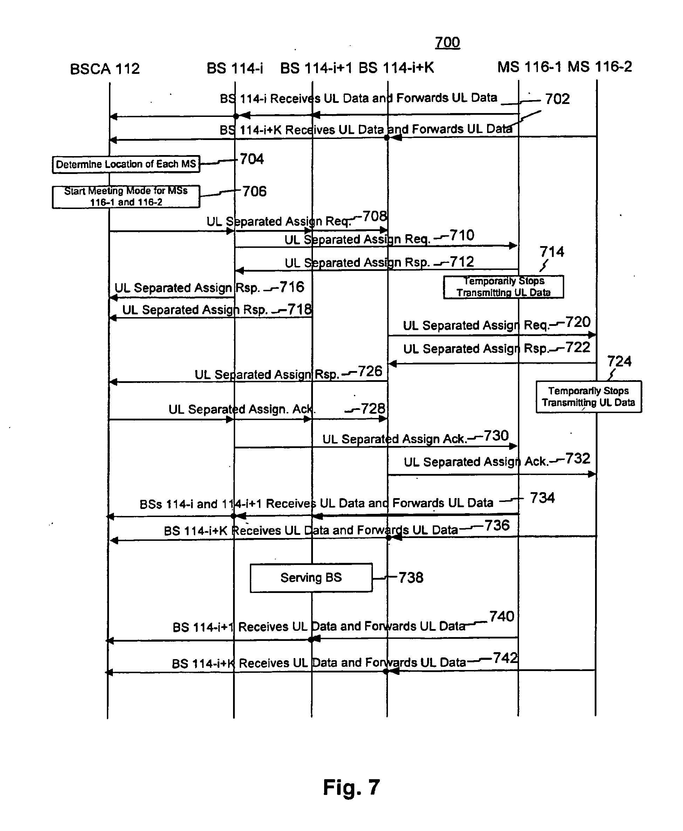

Fig. 7 illustrates an exemplary sequence diagram 700 for the base station control apparatus 112 (Fig. 1A) to control the base stations 114-i, 114-i+1, ..., 114-i+K noted above based on the meeting mode, according to an exemplary embodiment. For convenience of illustration, it is assumed that the mobile station 116-1 (Fig. 1A) is currently in the coverage area of the base station 114-i and is moving to the coverage area of the base station 114-i+1, and the mobile station 116-2 (Fig. 1A) is currently stopped at a station which is in the coverage area of the base station 114-i+K.

Referring to Figs. 1A and 7, the base stations 114-i and 114-i+K concurrently receive uplink (UL) data from the mobile stations 116-1 and 116-2, respectively, and forward their respective received data to the base station control apparatus 112 (702). In other words, the base stations 114-i and 114-i+K are serving the mobile stations 116-1 and 116-2, respectively. In addition, the base station 114-i+1 operates to receive signals from the mobile station 116-1 as the mobile station 116-1 moves toward the base station 114-i+1, similar to the above-described process for the SDMA mode.

In exemplary embodiments, the base station control apparatus 112 may determine a location of each of the mobile stations 116-1 and 116-2 based on, e.g., schedules of the trains 102-1 and 102-2 (704). The base station control apparatus 112 may further refine data regarding the location of each of the mobile stations 116-1 and 116-2 based on, e.g., an uplink specified report response received from each of the base stations 114-i and 114-i+K. If the base station control apparatus 112 determines that the number of base stations between the mobile stations 116-1 and 116-2 is less than the predetermined number K (Fig. 2-202), the base station control apparatus 112 may start the meeting mode for the base stations 114-i and 114-i+K (706). In the illustrated embodiment, the base station control apparatus 112 determines that there are K-1 base stations between the mobile stations 116-1 and 116-2, and the base station control apparatus 112 therefore determines to start the meeting mode.

In one exemplary embodiment, the base station control apparatus 112 multicasts an uplink separated assignment request 708 to each of the base stations 114-i, 114-i+1, ..., 114-i+K, requesting each of the base stations 114-i, 114-i+1, ..., 114-i+K to be prepared to transmit downlink data to, and receive uplink data from, multiple mobile stations, and to receive and forward uplink data from a mobile station currently in its coverage area.

Upon receiving the uplink separated assignment request 708, the base station 114-i sends an uplink separated assignment request 710 to the mobile station 116-1, requesting the mobile station 116-1 to temporarily stop transmitting uplink data and to switch to a TDMA mode. The mobile station 116-1 sends an uplink separated assignment response 712 to the base station 114-i, indicating the uplink separated assignment request 710 may be satisfied, and also temporarily stops transmitting uplink data to the base station 144-i(714).

The base station 114-i may then send an uplink separated assignment response 716 to the base station control apparatus 112, indicating that the mobile station 116-1 may temporarily stop transmitting uplink data and switch to the TDMA mode. In addition, the base station 114-i+1 may send an uplink separated assignment response 718 to the base station control apparatus 112.

Similarly, upon receiving the uplink separated assignment request 708, the base station 114-i+K sends an uplink separated assignment request 720 to the mobile station 116-2, requesting the mobile station 116-2 to temporarily stop transmitting uplink data and to switch to the TDMA mode. The mobile station 116-2 sends an uplink separated assignment response 722 to the base station 114-i+K, indicating the uplink separated assignment request 720 may be satisfied, and also temporarily stops transmitting uplink data to the base station 114-i+K (724).

The base station 114-i+K may then send an uplink separated assignment response 726 to the base station control apparatus 112, indicating that the mobile station 116-2 may temporarily stop transmitting uplink data and switch to the TDMA mode.

In one exemplary embodiment, the base station control apparatus 112 further multicasts an uplink separated assignment acknowledgment 728 to each of the base stations 114-i, 114-i+1, and 114-i+K, confirming that each of the base stations 114-i, 114-i+1, and 114-i+K may start to transmit to the base station control apparatus 112 uplink data received from a mobile station currently in its coverage area. The base station 114-i may then send an uplink separated assignment acknowledgment 730 to the mobile station 116-1, notifying the mobile station 116-1 that it may start to transmit uplink data based on the TDMA method. The base station 114-i+K may send an uplink separated assignment acknowledgment 732 to the mobile station 116-2, notifying the mobile station 116-2 that it may start to transmit uplink data based on the TDMA method.

As a result, the base station 114-i may receive uplink data from the mobile station 116-1 based on the TDMA method, and forward the received data to the base station control apparatus 112 (734). The base station 114-i+1 may also receive uplink data from the mobile station 116-1 based on the TDMA method. Similarly, the base station 114-i+K may receive-uplink data from the mobile station 116-2 based on the TDMA method, and forward the received data to the base station control apparatus 112 (736).

When the mobile station 116-1 moves from the coverage area of the base station 114-i to the coverage area of the base station 114-i+1, the base station 114-i+1 may become the serving base station for the mobile station 116-1 (738), similar to the above-described process for the SDMA mode. Accordingly, the base station 114-i+1 may receive uplink data from the mobile station 116-1 based on the TDMA method, and forward the received data to the base station control apparatus 112 (740), and the base station 114-i+K may receive uplink data from the mobile station 116-2 based on the TDMA method, and forward the received data to the base station control apparatus 112 (742).

When the mobile station 116-1 further moves to the coverage area of the base station 114-i+K, the base station 114-i+K will become the serving base station for both of the mobile stations 116-1 and 116-2. Accordingly, the base station 114-i+K may receive uplink data from both of the mobile stations 116-1 and 116-2 based on the TDMA method, and forward the received data to the base station control apparatus 112.

While embodiments have been described based on two mobile stations, the invention is not so limited. It may be practiced with equal effectiveness with a greater number of mobile stations.

While embodiments have been described based on trains, the invention is not so limited. It may be practiced with equal effectiveness with other types of vehicles.

Other embodiments of the invention will be apparent to those skilled in the art from consideration of the specification and practice of the invention disclosed herein. The scope of the invention is intended to cover any variations, uses, or adaptations of the invention following the general principles thereof and including such departures from the present disclosure as come within known or customary practice in the art. It is intended that the specification and examples be considered as exemplary only, the scope of the invention being indicated by the following claims.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

## Claims

1. A method for controlling a plurality of base stations located along a predetermined route (114-1, 114-2, ... 114-N) to provide wireless communication to a plurality of mobile stations (116-1, 116-2) each located in one of a plurality of vehicles (102-1, 102-2), the method comprising:
determining (202), for a first one (114-1) of the plurality of base stations that is serving a first one (116-1) of the plurality of mobile stations, whether a number of base stations between the first one (114-1) and a second one (114-2) of the plurality of base stations is less than a predetermined number, the second one (114-2) of the plurality of base stations serving a second one (116-2) of the plurality of mobile stations; and
controlling (204, 206) the first one (114-1) and the second one (114-2) of the plurality of base stations to communicate with the first one (116-1) and the second one (116-2) of the plurality of mobile stations, respectively, in a mode based on a result of the determining.

2. The method of claim 1, wherein when it is determined that the number of base stations is not less than the predetermined number, the controlling further comprises:
controlling (204) the first one and the second one of the plurality of base stations to communicate with the first one and the second one of the plurality of mobile stations, respectively, based on a space division multiple access, SDMA, mode.

3. The method of claim 2, wherein the controlling based on the SDMA mode further comprises:
controlling the first one (114-1) of the plurality of base stations to transmit data to the first one (116-1) of the plurality of mobile stations at a downlink frequency; and
controlling the second one (114-2) of the plurality of base stations to transmit data to the second one (116-2) of the plurality of mobile stations at the same downlink frequency.

4. The method of claim 2 or 3, wherein the controlling based on the SDMA mode further comprises:
controlling the first one (114-1) of the plurality of base stations to receive data from the first one (116-1) of the plurality of mobile stations at an uplink frequency; and
controlling the second one (114-2) of the plurality of base stations to receive data from the second one (116-2) of the plurality of mobile stations at the same uplink frequency.

5. The method of claim 2, 3 or 4, wherein the controlling based on the SDMA mode further comprises:
controlling a third one (114-3) of the plurality of base stations to receive signals from the first one (116-1) of the plurality of mobile stations, the third one of the plurality of base stations being a neighbor to the first one of the plurality of base stations; and
determining signal quality of the received signals.

6. The method of claim 1, wherein when it is determined that the number of base stations is less than the predetermined number, the controlling further comprises:
controlling (206) the first one and the second one of the plurality of base stations to communicate with the first one and the second one of the plurality of mobile stations, respectively, based on a meeting mode.

7. The method of claim 6, wherein the controlling based on the meeting mode further comprises:
controlling the first one (114-1) of the plurality of base stations to transmit data to the first one (116-1) of the plurality of mobile stations at a downlink frequency; and
controlling the second one (114-2) of the plurality of base stations to transmit data to the second one (116-2) of the plurality of mobile stations at the same downlink frequency.

8. The method of claim 6, wherein the controlling based on the meeting mode further comprises:
controlling the first one (114-1) of the plurality of base stations to transmit data to the first one (116-1) of the plurality of mobile stations at a first downlink frequency; and
controlling the second one (114-2) of the plurality of base stations to transmit data to the second one (116-2) of the plurality of mobile stations at a second downlink frequency different from the first downlink frequency.

9. The method of claim 6, 7 or 8, wherein the controlling based on the meeting mode further comprises:
controlling the first one (114-1) of the plurality of base stations to receive data from the first one (116-1) of the plurality of mobile stations based on a time division multiple access, TDMA, method.

10. The method of claim 6, 7 or 8, wherein the controlling based on the meeting mode further comprises:
controlling the first one (114-1) of the plurality of base stations to receive data from the first one (116-1) of the plurality of mobile stations based on a frequency division multiple access, FDMA, method.

11. The method of any one of the preceding claims, further comprising controlling the plurality of base stations to provide wireless communication to the plurality of mobile stations each located in one of the plurality of vehicles, wherein the plurality of vehicles are trains configured to move along a railway.

12. Base station control apparatus (112) for controlling a plurality of base stations located along a predetermined route (114-1, 114-2, ... 114-N) to provide wireless communication to a plurality of mobile stations (116-1, 116-2) each located in one of a plurality of vehicles (102-1, 102-2), the apparatus (112) being configured to:
determine, for a first one (114-1) of the plurality of base stations that is serving a first one (116-1) of the plurality of mobile stations, whether a number of base stations between the first one and a second one of the plurality of base stations is less than a predetermined number, the second one (114-2) of the plurality of base stations serving a second one (116-2) of the plurality of mobile stations; and
control the first one (114-1) and the second one (114-2) of the plurality of base stations to communicate with the first one (116-1) and the second one (116-2) of the plurality of mobile stations, respectively, in a mode based on a result of the determination.

13. The apparatus of claim 12, wherein when it is determined that the number of base stations is not less than the predetermined number, the apparatus is further configured to:
control the first one and the second one of the plurality of base stations to communicate with the first one and the second one of the plurality of mobile stations, respectively, based on a space division multiple access, SDMA, mode.

14. The apparatus of claim 12 or 13, wherein when it is determined that the number of base stations is less than the predetermined number, the apparatus is further configured to:
control the first one and the second one of the plurality of base stations to communicate with the first one and the second one of the plurality of mobile stations, respectively, based on a meeting mode.

15. A communication system (100) for providing wireless communication to a plurality of vehicles configured to move along a predetermined route, the system comprising:
a plurality of base stations (114-1, 114-2, ... 114-N) located along the route;
a plurality of mobile stations (116-1, 116-2) each located in one of the plurality of vehicles (102-1, 102-2); and
base station control apparatus (112) configured to:
determine, for a first one (114-1) of the plurality of base stations that is serving a first one (116-1) of the plurality of mobile stations, whether a number of base stations between the first one and a second one of the plurality of base stations is less than a predetermined number, the second one (114-2) of the plurality of base stations serving a second one (116-2) of the plurality of mobile stations; and
control the first one (114-1) and the second one (114-2) of the plurality of base stations to communicate with the first one (116-1) and the second one (116-2) of the plurality of mobile stations, respectively, in a mode based on a result of the determination.

## Patentansprüche

1. Verfahren zum Steuern von mehreren entlang einer vorbestimmten Strecke befindlichen Basisstationen (114-1,114-2, ... 114-N), um drahtlose Verbindung zu mehreren jeweils in einem von mehreren Fahrzeugen befindlichen Mobilstationen (116-1, 116-2) vorzusehen, wobei das Verfahren umfasst:
Ermitteln (202) für eine erste (114-1) der mehreren Basisstationen, die einer ersten (116-1) der mehreren Mobilstationen dient, ob eine Anzahl von Basisstationen zwischen der ersten (114-1) und einer zweiten (114-2) der mehreren Basisstationen kleiner als eine vorbestimmte Anzahl ist, wobei die zweite (114-2) der mehreren Basisstationen einer zweiten (116-2) der mehreren Mobilstationen dient; und
Steuern (204, 206) der ersten (114-1) und der zweiten (114-2) der mehreren Basisstationen zum Kommunizieren mit der ersten (116-1) bzw. der zweiten (116-2) der mehreren Mobilstationen in einem auf einem Ergebnis des Ermittelns beruhenden Modus.

2. Verfahren nach Anspruch 1, wobei bei Ermitteln, dass die Anzahl der Basisstationen nicht kleiner als die vorbestimmte Anzahl ist, das Steuern weiterhin umfasst:
Steuern (204) der ersten und der zweiten der mehreren Basisstationen zum Kommunizieren mit der ersten bzw. der zweiten der mehreren Mobilstationen beruhend auf einem Raummultiplex/SMDA-Modus.

3. Verfahren nach Anspruch 2, wobei das auf dem SDMA-Modus beruhende Steuern weiterhin umfasst:
Steuern der ersten (114-1) der mehreren Basisstationen, um Daten zu der ersten (116-1) der mehreren Mobilstationen bei einer Downlinkfrequenz zu übermitteln; und
Steuern der zweiten (114-2) der mehreren Basisstationen, um Daten zu der zweiten (116-2) der mehreren Mobilstationen bei der gleichen Downlinkfrequenz zu übermitteln.

4. Verfahren nach Anspruch 2 oder 3, wobei das auf dem SDMA-Modus beruhende Steuern weiterhin umfasst:
Steuern der ersten (114-1) der mehreren Basisstationen, um Daten von der ersten (116-1) der mehreren Mobilstationen bei einer Uplinkfrequenz zu empfangen; und
Steuern der zweiten (114-2) der mehreren Basisstationen, um Daten von der zweiten (116-2) der mehreren Mobilstationen bei der gleichen Uplinkfrequenz zu empfangen.

5. Verfahren nach Anspruch 2, 3 oder 4, wobei das auf dem SDMA-Modus beruhende Steuern weiterhin umfasst:
Steuern einer dritten (114-3) der mehreren Basisstationen, um Signale von der ersten (116-1) der mehreren Mobilstationen zu empfangen, wobei die dritte der mehreren Basisstationen ein Nachbar der ersten der mehreren Basisstationen ist; und
Ermitteln der Signalqualität der empfangenen Signale.

6. Verfahren nach Anspruch 1, wobei bei Ermitteln, dass die Anzahl der Basisstationen kleiner als die vorbestimmte Anzahl ist, das Steuern weiterhin umfasst:
Steuern (206) der ersten und der zweiten der mehreren Basisstationen zum Kommunizieren mit der ersten bzw. der zweiten der mehreren Mobilstationen beruhend auf einem Meeting-Modus.

7. Verfahren nach Anspruch 6, wobei das auf dem Meeting-Modus beruhende Steuern weiterhin umfasst:
Steuern der ersten (114-1) der mehreren Basisstationen, um Daten zu der ersten (116-1) der mehreren Mobilstationen bei einer Downlinkfrequenz zu übermitteln; und
Steuern der zweiten (114-2) der mehreren Basisstationen, um Daten zu der zweiten (116-2) der mehreren Mobilstationen bei der gleichen Downlinkfrequenz zu übermitteln.

8. Verfahren nach Anspruch 6, wobei das auf dem Meeting-Modus beruhende Steuern weiterhin umfasst:
Steuern der ersten (114-1) der mehreren Basisstationen, um Daten zu der ersten (116-1) der mehreren Mobilstationen bei einer Downlinkfrequenz zu übermitteln; und
Steuern der zweiten (114-2) der mehreren Basisstationen, um Daten zu der zweiten (116-2) der mehreren Mobilstationen bei einer zweiten Downlinkfrequenz, die sich von der ersten Downlinkfrequenz unterscheidet, zu übermitteln.

9. Verfahren nach Anspruch 6, 7 oder 8, wobei das auf dem Meeting-Modus beruhende Steuern weiterhin umfasst:
Steuern der ersten (114-1) der mehreren Basisstationen zum Empfangen von Daten von der ersten (116-1) der mehreren Mobilstationen beruhend auf einem Zeitmultiplex/TDMA-Verfahren.

10. Verfahren nach Anspruch 6, 7 oder 8, wobei das auf dem Meeting-Modus beruhende Steuern weiterhin umfasst:
Steuern der ersten (114-1) der mehreren Basisstationen zum Empfangen von Daten von der ersten (116-1) der mehreren Mobilstationen beruhend auf einem Frequenzmultiplex/FDMA-Verfahren.

11. Verfahren nach einem der vorhergehenden Ansprüche, welches weiterhin das Steuern der mehreren Basisstationen umfasst, um zu den mehreren jeweils in einem der mehreren Fahrzeuge befindlichen Mobilstationen drahtlose Verbindung vorzusehen, wobei die mehreren Fahrzeuge Züge sind, die ausgelegt sind, um sich entlang einer Bahnlinie zu bewegen.

12. Basisstationssteuerungsvorrichtung (112) zum Steuern von mehreren entlang einer vorbestimmten Strecke befindlichen Basisstationen (114-1, 114-2, ... 114-N), um drahtlose Verbindung zu mehreren jeweils in einem von mehreren Fahrzeugen (102-1, 102-2) befindlichen Mobilstationen (116-1, 116-2) vorzusehen, wobei die Vorrichtung (112) ausgelegt ist, um:
für eine erste (114-1) der mehreren Basisstationen, die einer ersten (116-1) der mehreren Mobilstationen dient, zu ermitteln, ob eine Anzahl von Basisstationen zwischen der ersten und einer zweiten der mehreren Basisstationen kleiner als eine vorbestimmte Anzahl ist, wobei die zweite (114-2) der mehreren Basisstationen einer zweiten (116-2) der mehreren Mobilstationen dient; und
die erste (114-1) und die zweite (114-2) der mehreren Basisstationen zum Kommunizieren mit der ersten (116-1)) bzw. der zweiten (116-2) der mehreren Mobilstationen in einem auf einem Ergebnis der Ermittlung beruhenden Modus zu steuern.

13. Vorrichtung nach Anspruch 12, wobei bei Ermitteln, dass die Anzahl der Basisstationen nicht kleiner als die vorbestimmte Anzahl ist, die Vorrichtung weiterhin ausgelegt ist, um:
die erste und die zweite der mehreren Basisstationen zum Kommunizieren mit der ersten bzw. der zweiten der mehreren Mobilstationen beruhend auf einem Raummultiplex/SMDA-Modus zu steuern.

14. Vorrichtung nach Anspruch 12 oder 13, wobei bei Ermitteln, dass die Anzahl der Basisstationen kleiner als die vorbestimmte Anzahl ist, die Vorrichtung weiterhin ausgelegt ist, um:
die erste und die zweite der mehreren Basisstationen zum Kommunizieren mit der ersten bzw. der zweiten der mehreren Mobilstationen beruhend auf einem Meeting-Modus zu steuern.

15. Kommunikationssystem (100) zum Vorsehen von drahtloser Verbindung zu mehreren Fahrzeugen, die ausgelegt sind, um sich entlang einer vorbestimmten Strecke zu bewegen, wobei das System umfasst:
mehrere entlang der Strecke befindliche Basisstationen (114-1, 114-2, ...114-N);
mehrere jeweils in einem der mehreren Fahrzeuge (102-1, 102-2) befindliche Mobilstationen (116-1, 116-2); und
eine Basisstationssteuerungsvorrichtung (112), die ausgelegt ist, um:
für eine erste (114-1) der mehreren Basisstationen, die einer ersten (116-1) der mehreren Mobilstationen dient, zu ermitteln, ob eine Anzahl von Basisstationen zwischen der ersten und einer zweiten der mehreren Basisstationen kleiner als eine vorbestimmte Anzahl ist, wobei die zweite (114-2) der mehreren Basisstationen einer zweiten (116-2) der mehreren Mobilstationen dient; und
die erste (114-1) und die zweite (114-2) der mehreren Basisstationen zum Kommunizieren mit der ersten (116-1)) bzw. der zweiten (116-2) der mehreren Mobilstationen in einem auf einem Ergebnis der Ermittlung beruhenden Modus zu steuern.

## Revendications

1. Procédé pour commander une pluralité de stations de base (114-1, 114-2, ... 114-N) situées le long d'une route prédéterminée pour fournir une communication sans fil à une pluralité de stations mobiles (116-1, 116-2) chacune située dans un d'une pluralité de véhicules (102-1, 102-2), le procédé comprenant :
la détermination (202), pour une première (114-1) de la pluralité de stations de base qui dessert une première (116-1) de la pluralité de stations mobiles, de si un nombre de stations de base entre la première (114-1) et une deuxième (114-2) de la pluralité de stations de base est inférieur à un nombre prédéterminé, la deuxième (114-2) de la pluralité de stations de base desservant une deuxième (116-2) de la pluralité de stations mobiles ; et
la commande (204, 206) de la première (114-1) et de la deuxième (114-2) de la pluralité de stations de base pour communiquer avec la première (116-1) et la deuxième (116-2) de la pluralité de stations mobiles, respectivement, dans un mode basé sur un résultat de la détermination.

2. Procédé selon la revendication 1, dans lequel lorsqu'il est déterminé que le nombre de stations de base n'est pas inférieur au nombre prédéterminé, la commande comprend en outre :
la commande (204) de la première et de la deuxième de la pluralité de stations de base pour communiquer avec la première et la deuxième de la pluralité de stations mobiles, respectivement, basée sur un mode d'accès multiple par répartition spatiale, SDMA (pour space division multiple access).

3. Procédé selon la revendication 2, dans lequel la commande basée sur le mode SDMA comprend en outre :
la commande de la première (114-1) de la pluralité de stations de base pour transmettre des données à la première (116-1) de la pluralité de stations mobiles à une fréquence de liaison descendante ; et
la commande de la deuxième (114-2) de la pluralité de stations de base pour transmettre des données à la deuxième (116-2) de la pluralité de stations mobiles à la même fréquence de liaison descendante.

4. Procédé selon la revendication 2 ou 3, dans lequel la commande basée sur le mode SDMA comprend en outre :
la commande de la première (114-1) de la pluralité de stations de base pour recevoir des données de la première (116-1) de la pluralité de stations mobiles à une fréquence de liaison montante ; et
la commande de la deuxième (114-2) de la pluralité de stations de base pour recevoir des données de la deuxième (116-2) de la pluralité de stations mobiles à la même fréquence de liaison montante.

5. Procédé selon la revendication 2, 3 ou 4, dans lequel la commande basée sur le mode SDMA comprend en outre :
la commande d'une troisième (114-3) de la pluralité de stations de base pour recevoir des signaux de la première (116-1) de la pluralité de stations mobiles, la troisième de la pluralité de stations de base étant une voisine de la première de la pluralité de stations de base ; et
la détermination d'une qualité de signal des signaux reçus.

6. Procédé selon la revendication 1, dans lequel lorsqu'il est déterminé que le nombre de stations de base est inférieur au nombre prédéterminé, la commande comprend en outre :
la commande (206) de la première et de la deuxième de la pluralité de stations de base pour communiquer avec la première et la deuxième de la pluralité de stations mobiles, respectivement, basée sur un mode de rencontre.

7. Procédé selon la revendication 6, dans lequel la commande basée sur le mode de rencontre comprend en outre :
la commande de la première (114-1) de la pluralité de stations de base pour transmettre des données à la première (116-1) de la pluralité de stations mobiles à une fréquence de liaison descendante ; et
la commande de la deuxième (114-2) de la pluralité de stations de base pour transmettre des données à la deuxième (116-2) de la pluralité de stations mobiles à la même fréquence de liaison descendante.

8. Procédé selon la revendication 6, dans lequel la commande basée sur le mode de rencontre comprend en outre :
la commande de la première (114-1) de la pluralité de stations de base pour transmettre des données à la première (116-1) de la pluralité de stations mobiles à une première fréquence de liaison descendante ; et
la commande de la deuxième (114-2) de la pluralité de stations de base pour transmettre des données à la deuxième (116-2) de la pluralité de stations mobiles à une deuxième fréquence de liaison descendante différente de la première fréquence de liaison descendante.

9. Procédé selon la revendication 6, 7 ou 8, dans lequel la commande basée sur le mode de rencontre comprend en outre :
la commande de la première (114-1) de la pluralité de stations de base pour recevoir des données de la première (116-1) de la pluralité de stations mobiles basée sur un procédé d'accès multiple par répartition dans le temps, TDMA (pour time division multiple access).

10. Procédé selon la revendication 6, 7 ou 8, dans lequel la commande basée sur le mode de rencontre comprend en outre :
la commande de la première (114-1) de la pluralité de stations de base pour recevoir des données de la première (116-1) de la pluralité de stations mobiles basée sur un procédé d'accès multiple par répartition en fréquence, FDMA (pour frequency division multiple access).

11. Procédé selon l'une quelconque des revendications précédentes, comprenant en outre la commande de la pluralité de stations de base pour fournir une communication sans fil à la pluralité de stations mobiles située chacune dans un de la pluralité de véhicules, où la pluralité de véhicules sont des trains configurés pour se déplacer le long d'une voie ferrée.

12. Appareil de commande de station de base (112) pour commander une pluralité de stations de base (114-1, 114-2, ... 114-N) situées le long d'une route prédéterminée pour fournir une communication sans fil à une pluralité de stations mobiles (116-1, 116-2) chacune située dans un d'une pluralité de véhicules (102-1, 102-2), l'appareil (112) étant configuré pour :
déterminer, pour une première (114-1) de la pluralité de stations de base qui dessert une première (116-1) de la pluralité de stations mobiles, si un nombre de stations de base entre la première et une deuxième de la pluralité de stations de base est inférieur à un nombre prédéterminé, la deuxième (114-2) de la pluralité de stations de base desservant une deuxième (116-2) de la pluralité de stations mobiles ; et
commander la première (114-1) et la deuxième (114-2) de la pluralité de stations de base pour communiquer avec la première (116-1) et la deuxième (116-2) de la pluralité de stations mobiles, respectivement, dans un mode basé sur un résultat de la détermination.

13. Appareil selon la revendication 12, dans lequel lorsqu'il est déterminé que le nombre de stations de base n'est pas inférieur au nombre prédéterminé, l'appareil est en outre configuré pour :
commander la première et la deuxième de la pluralité de stations de base pour communiquer avec la première et la deuxième de la pluralité de stations mobiles, respectivement, sur la base d'un mode d'accès multiple par répartition spatiale, SDMA (pour space division multiple access).

14. Appareil selon la revendication 12 ou 13, dans lequel lorsqu'il est déterminé que le nombre de stations de base est inférieur au nombre prédéterminé, l'appareil est en outre configuré pour :
commander la première et la deuxième de la pluralité de stations de base pour communiquer avec la première et la deuxième de la pluralité de stations mobiles, respectivement, sur la base d'un mode de rencontre.

15. Système de communication (100) pour fournir une communication sans fil à une pluralité de véhicules configurés pour se déplacer le long d'une route prédéterminée, le système comprenant :
une pluralité de stations de base (114-1, 114-2, ... 114-N) situées le long de la route ;
une pluralité de stations mobiles (116-1, 116-2) chacune située dans un de la pluralité de véhicules (102-1, 102-2) ; et
l'appareil de commande de station de base (112) configuré pour :
déterminer, pour une première (114-1) de la pluralité de stations de base qui dessert une première (116-1) de la pluralité de stations mobiles, si un nombre de stations de base entre la première et une deuxième de la pluralité de stations de base est inférieur à un nombre prédéterminé, la deuxième (114-2) de la pluralité de stations de base desservant une deuxième (116-2) de la pluralité de stations mobiles ; et
commander la première (114-1) et la deuxième (114-2) de la pluralité de stations de base pour communiquer avec la première (116-1) et la deuxième (116-2) de la pluralité de stations mobiles, respectivement, dans un mode basé sur un résultat de la détermination.
